# EUROPEAN PATENT APPLICATION

(11) **EP 4 711 476 A1**
(43) Date of publication of application: **18.03.2026**
(21) Application number: 24000113.1
(22) Date of filing: 16.09.2024
(51) Int. Cl.: C21B 13/00, C21B 13/02, C21B 13/12, C21B 13/14, C01B 3/02, C01B 3/08, C01B 3/10, C22B 5/12, C22B 21/02

(54) **PROCESS FOR PREPARING IRON METAL BY REDUCTION OF IRON OXIDE WITH HYDROGEN AND DEVICE FOR IMPLEMENTING THIS PROCESS**

(71) Applicant: Energy 13 GmbH, 07743 Jena (DE)
(72) Inventor: Portugues, Lawrence, 62840 Lorgies (FR); Dentler, Carsten, 61350 Bad Homburg (DE)
(74) Representative: Ackermann, Joachim

(57) **Abstract**

Process for preparing iron metal by reduction of iron oxide with hydrogen and device for implementing this process

Disclosed are a process and a device for preparing iron metal by reduction of iron oxide with hydrogen. The process comprises the steps:
i) generate a hot gas comprising hydrogen and metal oxide in a first reactor by reacting water and a metal selected from the group consisting of silicon, magnesium, aluminum or alloy containing two or more of these metals,
ii) introduce the hot gas from the first reactor into a second reactor comprising iron oxides,
iii) react the iron oxide with the hydrogen in the second reactor to generate metallic iron and a hot gas comprising water vapor,
iv) charge the second reactor with iron oxide and discharge the metallic iron from the second reactor, and
v) recirculate at least a portion of the thermal energy contained in the hot gas from step iii) from the second reactor into the first reactor.

The process of this invention generates no or only small amounts of CO₂, is energetically favourable and easy to implement. In the process and the device of this invention conventional reactors can be used.

## Description

### Technical Field

This invention relates to a process for manufacturing iron metal with an improved heat balance and low or zero carbon dioxide emissions.

### Background of the Invention

This invention concerns the growing interest of producing iron metal with minimum energetic expense and with avoidance of direct CO₂ emissions.

Large quantities of CO₂ are released during today's steel production. Green steel refers to steel production with low or without CO₂ emissions and is an important component in the fight against climate change. Instead of coal, hydrogen is used to reduce the iron ore. This process is also known as direct reduction, as the hydrogen reacts directly with the iron oxide from the pig iron ore. This saves a total of 1.5 tons of CO₂ per ton of steel.

Steel production is one of the world's largest emitters of greenhouse gases accounting for about 10% of global CO₂ emissions. Substitution with green steel worldwide is therefore a high priority in the industry. While the importance of green steel has been reckognized nevertheless, there are still technological hurdles to overcome.

The process for producing green steel using hydrogen is called direct reduction. In principle, the production of green steel hardly differs from conventional steel. In conventional steel production, carbon from coal is used as an energy source and reducing agent. The iron ore is heated by burning the coal. At the same time, the reduction with carbon removes the oxygen from the iron oxide and pure iron is produced.

In direct reduction, hydrogen is used as a reducing agent. The hydrogen atoms also remove the oxygen molecule from the iron oxide and react to form water. This produces no CO₂, The advantage of direct reduction is that the carbon content is already below 2% at the end of the process. This means that the pig iron can be referred to directly as steel and requires no further carbon reduction.

There are several advantages of green steel. There are no CO₂ emissions during steel production. Moreover, existing plants can be simply converted and the dependence from fossil raw materials is minimized as coal is no longer needed as a reducing agent.

Nevertheless, there are still several challenges in the transformation to green steel.

Direct reduction for the production of green steel is not yet fully developed. Large-scale industrial use is not yet feasible. However, industry and research are working flat out to make direct reduction ready for series production. A number of pilot plants are currently being built to test the technology.

The heart of the direct reduction process is the shaft furnace, which is filled with lump ore and pellets from above. Carbon monoxide and hydrogen gas are used to dissolve out the oxygen in the iron ore. In contrast to the blast furnace process, however, these reducing gases do not result from the combustion of coke. Instead, these reducing agents are produced from natural gas outside the shaft furnace using catalysis.

The process gases carbon monoxide (CO) and hydrogen (H₂) are blown into the furnace at temperatures of around 1000 °C and flow through the iron ore where the reduction of the iron oxides takes place. During this process the iron ores are not melted. This also applies to the gangue contained in the ore, which is why the iron ores used must be relatively low in gangue from the outset. Only the oxygen is dissolved out of the iron ores by the reducing gases. This causes the iron ore to crack on the surface. The appearance resembles a porous sponge, which is why deoxidized iron ore with a high iron content is also known as sponge iron.

In order to prevent excessive re-oxidation of the sponge iron in the subsequent air, it must be cooled down in the lower area of the shaft furnace. Carburization as in the blast furnace process does not occur in the direct reduction process, as coke is not used as a reducing agent. As a result, the carbon content of the sponge iron remains relatively low at around 2 %. Slag-forming additives are also not used in the shaft furnace. Impurities are removed by a subsequent electric steel process. In this process, the sponge iron is melted down to form the actual crude steel.

In the electric steel process, the sponge iron obtained from the direct reduction process is used to produce crude steel. As a rule, recycled scrap is also added to the process and possibly pig iron from the blast furnace process. These components are then mixed in a special furnace. While the pig iron is already liquid, the sponge iron and the added scrap must be melted down. This is done using electrodes that ignite a hot arc in the furnace. By turning the furnace, the resulting slag can be poured off first and then the crude steel can be poured off by turning it again in the other direction. For smaller quantities of steel, the necessary melting heat can also be generated in special induction furnaces (induction process). Due to the relatively high oxygen content in the scrap iron (oxidized iron), the pig iron impurities are oxidized at the same time, so that the melt is refreshed to a certain extent. At the same time, additives bind the unwanted iron companions in a slag.

The electric steel processes are characterized by extremely high process temperatures of over 3000 °C. This means that even refractory alloying elements in scrap, such as tungsten, molybdenum and niobium can be melted. In principle, all types of steel can be produced using the electric steel process, although this process is usually reserved for high-alloy steels due to the high costs involved. Once crude steel has been obtained from the solid sponge iron using the electric steel process, the refined post-treatment is also carried out using secondary metallurgical methods.

Summarizing, the production of green steel is very energy-intensive in terms of electricity. A large part of the electricity consumption is accounted for by the production of hydrogen and another part is used in the processing of the iron metal generated by hydrogen reduction. If the electricity is obtained from renewable sources, such as from photovoltaics or as wind power this still inreases the technological and econonomical challenges as green electricity is significantly more expensive than electricity obtained via conventional processes. The steel industry is therefore still facing major challenges. Not only do the process and the blast furnaces have to be converted. A sufficient amount of green energy must also be available to produce the hydrogen. A complete switch to green steel is generally possible, but it will still take some time.

This invention demonstrates a new optimized solution for the generation of energy and the energy efficient production of iron using hydrogen as a reducing agent.

### Prior art

Processes using metals as fuel for energy generation and for the manufacture of base chemicals, such as hydrogen or carbon monoxide, are generally known.

WO 2014/173991 A1 proposed a full developed chemical-industrial hyperbranch of circles using aluminium as an energy storage material which is reacted with CO₂ to generate thermal energy for caloric grid-energy production and at the same time for converting CO₂ to CO which is used as a base chemical for synthesis of chemicals.

Metal burners using air or oxygen gas with no chemical feedstock transformation are generally known.

In DIS-Vertrags Nr. 150401 Programm Solarchemie/Wasserstoff; Bundesamt für Energie BFE Schlussbericht Juni 2004; Aluminium als Brennstoff und Speicher; J. Wochele, Dr. Chr. Ludwig; Paul Scherer Institut CH-5232 Villigen results about the Aluminum-Alumina cycle as renewable electric energy storage are reported. Key hurdles for air or oxygen combustion of Aluminum metal to its oxide are disclosed. In this report a flame reactor was proposed and established which has been developed from an aluminum oxidizer. Most interestingly in this analysis it was stated that the biggest loss in such energy cycle would be the carbon electrode itself, so the today established industrial introduction of low abrasive electrodes would yield a reasonable energy-storage-energy cycle per se.

Another group, Trowell, focuses on reacting aluminum in contact with water to release the reaction enthalpy in the form of heat and hydrogen. The result would be instant access to clean power, with no release of greenhouse gases. In a 2018 talk Trowell explains the underlying reactions and potential applications of this technology concept. While laboratory work has shown that the use of metal fuels with heat engines is technically feasible, no one has yet demonstrated the conversion in practice. One concept has been disclosed, for example, by Bergthorson, J. M. et al.: "Metal-Water Combustion for Clean Propulsion and Power Generation", APPLIED ENERGY, vol. 186, 1 January 2017 (2017-01-01), pages 13 - 27, XP055746514

The next step toward turning the lab findings into usable technology, therefore, will be to build a prototype conversion and couple it to a heat engine, again with a focus to optimize particle conversion at lower temperatues by proposing specialty metal powders including nano-spheres; compare https://www.mcgill.ca/newsroom/- channels/news/could-metal-particles-be-clean-fuel-future, published 2015.

Bergthorson states that developing metal recycling processes that don't involve CO₂ emissions is also critical; compare https://www.mcgill.ca/newsroom/channels/- news/could-metal-particles-be-clean-fuel-future-257172.

For continuous use all academic or published industrial methods typically only show principles, hurdles and optimize few aspects of a continuous metal-fuel combustion.

Fewer technical or academic theoretical considerations show solutions for metal-fuel reactors towards bulk material use and technically scalable processes.

Oxygen burners using special micronized Aluminium yield a stable continuous flame (F. Halter et al. in Applications in Energy and combustion Science, Vol. 13, https://doi.org/10.1016 (2023)). Al, Mg and the Alkali metals and their alloys are reported to show self-sustained air-oxygen reactions from gas propelled powder transport. The reported temperatures indicate the importance of the self sustained kinetic within the flame geometry.

WO 2021/228429 A1 discloses the advantage of a liquid metal fuel present in all Al smelting architectures to be dispersed into a reactor with precursor gases containing H₂O or CO₂ and yields reasonable turnover together with the heat introcuced by the liquid aluminium into the system.

As cited above although there is lot of scientific and theoretical hypothesis work about reaction of Al with air, O₂, no technical burner or converter has been described that facilitates a stable flame under continuous dosing of solid Al and which does not plug and in air or oxygen only with the use of a micronized Aluminium preparation.

The use of Al as energy storing material and oxidation with air for heat generation in a pilot scale burner has been investigated in Paul Scherer Institute in Switzerland (compare J. Wochele, Chr. Ludwig; Aluminium als Brennstoff und Speicher. Bundesamt für Energie BFE (2004); https://infoscience.epfl.ch/record/165265).

Even after several steps of optimization the burner blocked although the oxidation of Al with an oxygen containing gas like air is understood to be easier to be conducted than the oxidation without oxygen.

Also, the particle size has an influence on the implementation of full oxidation of aluminium mass. For example, Dilip Srinivas Sundaram, Puneesh Puri, Vigor Yang; A general theory of ignition and combustion of nano- and micron-sized aluminum particles. Combustion and Flame Volume 169, July 2016, Pages 94-109. https://doi.org/10.1016/j.combustflame.2016.04.005 report that oxidation time increases significantly with particle size. Moreover, it is general knowledge that higher volume specific surface of smaller particles supports mass transfer.

In our development of flexible high-temperature reactors for the simultaneous provision of hydrogen and thermal energy, e.g. for combined heat and power plants, without the use of coal, mineral oil, natural gas or other CO₂ sources, it has been found that fluctuating grid electricity demand should be avoided or minimized. Significant improvements are required here, which are implemented with the present invention.

Surprisingly, it was found that the high steam temperatures in steel production are ideally suited to stabilize a flame in the high-temperature reactor and thus to optimize the generation of thermal energy and hydrogen in such a way that the waste heat from the high-temperature reactor in conjunction with the iron production reactor noticeably reduces the precious addition of electrical energy and can completely replace it in special situations. This means that a metal is used as the main energy carrier and that the use of electrical energy is only necessary in special support or start-up situations. In addition, oxygen is not or hardly ever expelled from the iron ore as CO₂, so that the end products of the coupled high-temperature reactor and iron reduction reactor are the reduced iron metal and the oxidized metal from the high-temperature reactor as oxygen scavenger, for example the highly desirable and environmentally harmless Al₂O₃ when aluminium is used as fuel. This can then be reintroduced into the industrial cycle by producing Al metal again through smelting electrolysis.

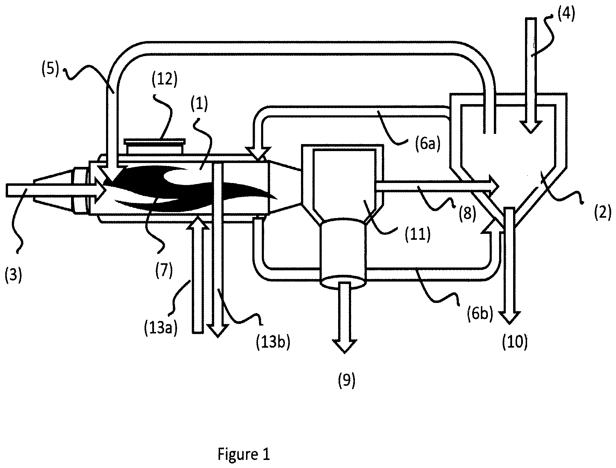

It is therefore particularly advantageous to form one or more cycles, as shown in the example of the direct hydrogen process outlined in Figure 1.

The objective of the present invention is the provision of a process for producing iron metal from iron oxides producing no or only small amounts of CO₂ which process is energetically favourable and is easy to implement.

Another objective of the present invention is the provision of an energetic favourable process for producing iron metal from iron oxides by using hydrogen as a reducing agent which process can be implemented by using conventional reduction reactors.

Still another objective of the present invention is the provision of a process for combined generation of thermal and radiant energy and iron metal.

Another objective of the present invention is a device that is designed to carry out a process for combined generation of thermal and radiant energy and iron metal.

### Summary of the invention

Surprisingly it has been found that these objectives can be solved by providing an oxidation reaction between a selected metal and water to generate thermal and radiant energy and hydrogen, by combining this with a reduction of iron oxide by means of hydrogen and by recirculating the thermal energy contained in the hot water vapor generated by the iron oxide reduction into the metal oxidation reactor.

According to the process of the invention chemical energy stored in a metal, such as Aluminium, can be transformed into thermal and radiant energy and into chemical energy stored in hydrogen and other chemicals

It has been shown that the inventive process leads to a particularly desirable synergy. This is caused by the combination of the thermal energy contained in hot waste gases from the iron reduction process, in particular hot steam, with a source of thermal energy obtained by reacting metals, i.e. in an oxidation of metal fuels, in particular aluminum. The thermal energy in the exhaust gases from the iron reduction process is transferred into the metal oxidation process and therefore the reaction heat of the reduction process is utilized in the metal oxidation process. The waste gas from the metal oxidation process, on the other hand, transports thermal energy into the iron reduction process, whereby the reaction heat of the metal oxidation process is utilized.

It has also been shown that fluctuations in the intensity of the reactions in the various reactors can be specifically controlled with the aid of the process according to the invention. Thus, the reaction rate of the reduction of the iron oxide or the oxidation of the metal fuel can be specifically increased or decreased by increasing or decreasing the temperature and/or the flow rate of the hot reaction gases. The temperature can be controlled by extracting thermal energy through heat exchangers. The flow rate can be controlled by controlling the delivery rate of pumps.

In one embodiment the present invention relates to a process for preparing iron metal by reduction of iron oxide with hydrogen comprising the steps:
i) generate a hot gas comprising hydrogen and metal oxide in a first reactor by reacting water and a metal selected from the group consisting of silicon, magnesium, aluminum or alloy containing two or more of these metals,
ii) introduce the hot gas from the first reactor into a second reactor comprising iron oxides,
iii) react the iron oxide with the hydrogen in the second reactor to generate metallic iron and a hot gas comprising water vapor,
iv) charge the second reactor with iron oxide and discharge the metallic iron from the second reactor, and
v) recirculate at least a portion of the thermal energy contained in the hot gas from step iii) from the second reactor into the first reactor.

In a preferred process variant in step v) the hot gas comprising water vapor from the second reactor is introduced into the first reactor.

In another embodiment the present invention relates to a device for preparing iron metal by reduction of iron oxide with hydrogen comprising the elements:
A) at least one first reactor for generate a hot gas comprising hydrogen and metal oxide by reacting water and a metal selected from the group consisting of silicon, magnesium, aluminum or alloy containing two or more of these metals,
B) at least one feed line for introducing the metal and water into the first reactor or into a mixing device arranged upstream to the first reactor and discharging into the first reactor,
C) a second reactor for reacting iron oxide with hydrogen to generate metallic iron and a hot gas comprising water vapor,
D) at least one feed line for introducing the iron oxide into the second reactor,
E) at least one discharge line for discharging the iron metal from the second reactor,
F) at least one device that recirculates at least a portion of the thermal energy contained in the hot gas generated in the second reactor from the second reactor into the first reactor.

In a preferred embodiment of the device of this invention element F) is at least one line for the hot gas generated in the second reactor that connects the second reactor with the first reactor. This line introduces at least a portion of said hot gas for reaction between water and metal into the first reactor.

### Detailed Description of the Invention

In a first step a hot gas comprising hydrogen and metal oxide is geneated in a first reactor by reacting water and a metal selected from the group consisting of silicon, magnesium, aluminum or alloy containing two or more of these metals. The reaction can be carried out in a reactor known per se, e.g. in a reactor disclosed in F. Halter et al. in Applications in Energy and combustion Science, Vol. 13, https://doi.org/- 10.1016 (2023)). Instead of a metal-oxygen mixture as in the publication of F. Halter et al. here a metal-water mixture is used.

The first reactor and the reaction performed therein are scalable within a broad range. Typical scales range from 10 kW to 10 GW, preferably from 50 kW to 1 GW of electrical energy produced from the heat generated by the process or the reactor, respectively.

In the first reactor water and selected metal are combined with each other. Hot water vapour is introduced into the inlet zone of the reactor. This feed stream can optionally be diluted with inert gases, for example by nitrogen or argon. The metal introduced into the first reactor can be in arbitrary form, for example in the form of powder, granules, strips, wires, ingots, tinsels or strands, preferably through continuous or discontinuous reactor feeds, optionally using airlocks.

Preferably the metal is introduced into the inlet zone of the first reactor in the form of powder, chips, pellets, ingots, tinsels or metal rods.

In a preferred embodiment of the process / the device of this invention the first reactor has a cylindrical shape the interior thereof forming a reaction chamber having an inlet zone for reactants, a central zone for the oxidation reaction and an outlet zone for a product gas. The metal and optionally the oxdiant or other ingredients or the mixure of two or more thereof are introduced into the inlet zone via feed lines that are arranged parallel, tangential or perpendicular to the cylinder axis..

In a preferred version of this embodiment the metal and other reagents and ingredients are introduced into the inlet zone of the reaction chamber via a plurality of pipes tangentially extending through the cylindrical reactor jacket, as a result of which a vortex is formed in the reaction chamber which moves in the direction towards the outlet zone.

Metal used as a fuel in the first reactor can be prepared from the corresponding oxdies by melt electrolysis, preferably by using electricity from regenerative sources, such as photovoltacis or wind energy. Metal fuel can also be used as metal scrap, preferably as Aluminium scrap.

The metals or metal alloys used as a fuel in the first reactor are available as a metallic raw material on an industrial scale and represent an alternative to other transportable energy sources. The metals or metal alloys are inert and non-hazardous to store and transport. This gives these metals or metal alloys a significant advantage as an energy source over crude oil, natural gas or coal, which are considered to be much more hazardous to the environment from their exploitation, their refinement, distribution and transport as well as their downstream use.

The oxidant water is preferably introduced as vapour into the inlet zone of the first reactor.

In continuous operation the temperature in the inlet zone of the first reactor is high. Typical temperatures in this zone are between 800 and 1500 C. This promotes the reaction between water and metal generating hydrogen and metal oxide without any need to trigger the reaction between the reactants, for example by means of an ignition device. Moreover, the reaction between metal and water is highly exothermic and high temperatures are generated in the central zone of the reaction chamber of the first reactor by the oxidation reaction.Typically the oxidation reaction in the first reactor generates reaction heat with a flame core temperature in the range between 2000 and 3500°C. This will guarantee an ignition of the metal and formation as well as propagation of the flame(s).

In a preferred embodiment the oxidation reaction in the first reactor generates temperatures to cause the metal to evaporate. This can be achieved, for example, by controlling the throughput of metal and water vapor or by adding an additional oxidant to the metal. Preferably temperatures of 2000°C or higher are generated, more preferred temperatures between 2000 and 3500°C, and very preferred temperatures between 2500 and 3000°C. The temperatures in the reaction zone are measured by using a radiation thermometer.

In continuous operation hot reactor walls and hot water are used to cause spontaneous combustion. In case there is already a reaction going on in the reaction chamber there is nothing to do. The reactive mixture will be ignited by the heat generated in the reaction chamber. The reaction between metal and water generates heat, electromagnetic radiation, oxidized metal and hydrogen.

When initiating the reaction beween water and metal in the first reactor at the start of the process of this invention it is advisable to use a mixture of particulate metal and gaseous oxidant, for example oxygen or air. The oxidation reaction is triggered by means of an ignition device. As soon as the reaction has started the ignition device can be shut down and as oxidant water is introduced into the inlet zone of the first reactor. After a continuous reaction has been established the reaction is self-sustaining

The particulate metal used to start the reaction in the first reactor may have a particle size in the range between 1 and 500 µm; but also particle sizes of smaller than 1 µm are possible. The heat of reaction between the oxidant and particulate metal will allow a substantial micronization and vaporisation in-process of the particulate metal to improve conversion to a satisfactory steady state flame process. Statistical thermodynamic consideration shows that such heat of reaction results in a flame with core temperatures of 2500 and higher, preferably of 2700 and higher and most preferred of above 3000°C.

In a preferred embodiment of the process of this invention the particulate metal used used to start the reaction in the first reactor consists of metal particles with diameters of less than 100 µm, more preferred of less than 50 µm.

The particulate metal for starting the reaction in the first reactor is preferably magnesium, aluminium or an alloy containing aluminium and magnesium, very preferred particulate aluminium is used.

An ignition of the reactive mixture can be performed by using an ignition device. Ignition devices are known to the skilled artisan.

Examples of ignition devices are electric arcs arranged in the inlet zone at the end of the feed line(s), inductive heaters or lasers arranged outside the reactor, the radiation of the laser being coupled into the reaction chamber through one or more windows in the reactor jacket or the inductive heater generating heat acting on the space region at the end of the feed line(s).

The quantity of oxidant water is generally selected in a manner that the whole content of oxygen present in the water is transferred into the metal oxide. The amount of oxidant water should not exceed the amount necessary for complete oxidation of the metal; thus the amount of water should be selected in a manner that all oxygen contained in the water is finally bound in the metal oxide. Moreover, the total amount of metal present in the first reactor should become oxidized.

In the reaction between metal and water the metal is oxidized by the water resulting in metal oxide, hydrogen, optionally unreacted metal, and optionally further gaseous constituents, such as unreacted water or inert gases. In this oxidation reaction in the first reactor no carbon oxides are generated. Besides hydrogen, metal oxide and optional further ingredients large amounts of thermal and radiant energy are produced heating the product gas from the first reactor. The temperature of this gas can be adjusted by transferring heat from the product gas to a heat transfer medium using one or more heat exchangers located downstream the first reactor and upstream the second reactor and/or located in the reactor jacket of the first reactor. This allows a control of the gas temperature before this enters into the second reactor.

Heat transfer media used in the heat exchanger(s) are known to the skilled artisan. Examples of heat transfer media are water, glycols, glycerine, molten metals, molten salts or thermal oils, such as silicones or high-boiling hydrocarbons.

The thermal energy contained in the heat transfer media can be supplied to an exploiting consumer. Exploiting consumers can be almost all technical and chemical energy converters. In particular, low-pressure or high-pressure steam turbines for power generation, Stirling engines and other heat engines or direct power generators on temperature gradients, thermolysis reactors, in particular reactors for water thermolysis to hydrogen can be mentioned as exploiting consumers.

The energy extracted from the hot gas from the first reactor and/or from the second reactor can be dissipated for energy conversion or heat or cold generation, e.g. for heating, by storing it or consuming it directly or indirectly. The thermal energy generated can, for example, be fed to a steam turbine in order to generate electricity. In an alternative embodiment the thermal energy extracted from the hot gas from the first reactor and/or from the second reactor can be used for heating materials to be fed into the first or second reactor.

In the process / the device of this invention one or more first reactors and one or more second reactors may be present. Several reactors of the same type are arranged in parallel and are preferably switchably integrated within the device. This allows single reactors to be active or inactive in the process / the device of this invention.

In step ii) of the process of this invention the hydrogen-containing hot gas from the first reactor is introduced into the second reactor.

The metal oxide containing hot gas from the first reactor can be fed directly into the second reactor with or without temperature adjustment by means of heat exchangers. Preferably, the hot gas from the first reactor is purified by removing the metal oxide and optionally further solid or liquid constituents thereby generating a purified product gas which is introduced into the second reactor with or without temperature adjustment by means of heat exchangers.

Preferably the hot gas from the first reactor before feeding this into the second reactor is purified by removing solid and liquid constituents and by adjusting the temperature.

For purification of the hot gas from the first reactor is discharged from the first reactor and is transferred into one or more separation devices. Different separation devices can be used. These devices are known to the skilled artisan in the field of flue gas purification.

Examples for separation devices are centrifugal separators, known as cyclones, or fabric filters or electrostatic precipitators or ceramic filters. Preferred separation devices are cyclones.

Preferably at least 90 wt-%, more preferred more than 99 wt-% of the solid and liquid constituents present in the hot gas entering the separation device are removed by this device.

The hot gas from the first reactor can be fed at various points into the second reactor. The hot gas stream can be divided into several partial streams for this purpose, which can be fed into the second reactor at different locations. In general, one end of the second reactor is loaded with iron oxides and optionally with additives and these components move towards the other end of the reactor during the reduction process. The hot gas is introduced into the second reactor in such a manner that it moves through the second reactor in countercurrent to the iron oxides. In one embodiment, one end of the second reactor is loaded with iron oxides and optionally with additives and the hot gas is fed into the second reactor at the other end or a portion of the hot gas is fed into the second reactor at the other end and one or more partial streams of the hot gas are fed into the reactor at sites located between the two reactor ends.

As second reactor different devices customary in iron production can be used. Examples thereof are blast furnaces, shaft furnaces, rotary kilns, fluidized bed furnaces or electric furnaces.

The temperature of the hot gas from the first reactor introduced into the second reactor can be adjusted by using different measures. The hot gas can be used without any temperature adjustment into the second reactor; or the temperature of the hot gas exiting the first reactor can be lowered by extracting a portion of the thermal energy from the hot gas by means of heat exchanger(s) and/or by adding inert gases of lower temperature to the hot gas; or the temperature of the hot gas exiting the first reactor can be raised by reacting a portion of the hydrogen present in the hot gas with an oxidant, preferably with air.

Preferably, the temperature of the hot gas prior to introduction into the second reactor is adjusted to a predetermined value. The gas temperature at the entrance into the second reactor is preferably controlled and is an important parameter for the reactions taking place in the second reactor. By adjusing the temperature, for example the reaction speed of the reduction process can be controlled or the nature of the iron phase, e.g. solid spongy or liquid, can be affected.

If, for example a furnace reactor comprising solid and spongy iron is to be discharged without interruption of the reduction process the temperature of the hot gas from the first reactor can be temporarily be increased above the melting point of the iron, e.g. by reducing the amount of heat extracted by the heat exchangers uprstrem the second reactor and/or by adding air to the hot gas thereby burning a portion of the hydrogen contained in the hot gas.

For controlling the temperature of the hot gas from the first reactor one of more temperature sensors may be installed upstream the second reactor and downstream the first reactor. These sensors are known to the skilled artisan in the field of hot gas processing.

Another process parameter for controlling the reduction reaction in the second reactor is the flow velocity of the hot gas from the first reactor. This can be adjusted by using pumps which ensure a predetermined flow velocity. Another means for adjusting the flow velocity is a stream of inert gas that is injected into the flow of hot gas. These messures are known to the skilled artisan in the field of hot gas processing.

The temperature of the hot gas prior to the introduction thereof into the second reactor depends on the type of furnace used for the reduction process. If a shaft furnace is used a temperature below 1500°C is selected. If a blast furnace is used, a temperature above 1600°C is selected, preferably a temperature between 1600 and 1900°C is selected.

Preferably, the temperature of the hot gas in step ii) at the inlet site into the second reactor is between 900 and 1200°C, more preferred between 1000 and 1100°C.

In another embodiment the temperature of the hot gas in step ii) at the inlet site into the second reactor is preferably between 1600 and 2000°C, more preferred between 1650 and 1900°C.

The hydrogen containing hot gas from the first reactor contains molecular hydrogen H₂ and atomic hydrogen H. The latter is a favoured ingredient as this is more reactive in a reduction process compared with molecular hydrogen.

The atomic hydrogen content is governd among others by the temperature of the hot gas. In a preferred embodiment the concentration of atomic hydrogen is raised by methods known to the skilled artisan. This may be contact of the hot gas with a plasma-generating device, such as an electric arc, or with a catalyst, such as nickel metal.

A fraction of the hydrogen introduced into the second reactor can come from other sources, for example can be generated from water in electrolyzers or from hydrocarbons, such as methane by plasmolysis. If a fraction of hydrogen from other sources is used this is preferably combined with the hot gas from the first reactor prior to introducing this into the second reactor.

In step iii) of the process of this invention the iron oxide is reacted with the hydrogen in the second reactor to generate metallic iron and a hot gas comprising water vapor. This reaction corresponds to conventional reduction processes of iron oxides with hydrogen. The second reactor may contain adjuvants conventionally used in iron production, besides iron oxides and hydrogen-containing gas.

In step iv) the second reactor is charged with iron oxide and the metallic iron is discharged.

Steps iii) and iv) can be performed continuously and/or batchwise. The second reactor can be charged continuously with reactants, e.g. iron oxides and hydrogen containing gas and iron metal can be discharged in a batchwise manner or continuously. Different methods for carrying out steps iii) and iv) are possible and are generally known by the skilled artisan.

To produce iron, ores in the form of iron oxides must be chemically reduced. Iron ores in the form of sulphides are roasted in the presence of air and are converted into iron oxides. To produce pig iron in blast furnaces, these processed ores (sinter or pellets) are preferably fed with an admixture of additives. In addition, a large amount of energy is required, which is provided by hydrogen. In direct reduction processes, in contrast to the blast furnace route, the iron ores are reduced "directly", i.e. without a smelting process and therefore at lower temperatures, to solid sponge iron, which still contains the accompanying elements of the ores. Direct reduction is a more energy-efficient process alternative to the blast furnace route.

In the blast furnace, iron ore mixed with additives or iron ore and additives are alternately poured into the top of the furnace in layers. The charge sinks into the furnace shaft and is dried, heated, the iron oxides reduced and finally melted by the rising process gas containing hydrogen at a temperature of around 1600 to 2200 °C at the injection point. The various iron oxides react with hydrogen over several stages until finally metallic iron is present, which accumulates at the bottom of the blast furnace. The oxygen from the iron combines with the hydrogen to form water. The hot product gas coming out of the blast furnace is freed of any entrained dust and fed back into the first reactor. As with the product gas from the first reactor, some of the thermal energy can also be extracted from the product gas from the second reactor. This can be done by means of one or more heat exchangers arranged between the exit zone for the hot gas of the second and the inlet zone of the first reactor. This thermal energy can be used to operate the hot blast stoves, fans, pumps, lighting, gas purification and transportation devices required for the blast furnace process.

In addition to liquid iron, liquid slag is also produced in the blast furnace. As the melting point of a mixture of SiO₂ and Al₂O₃ is too high to form a liquid slag at the temperatures prevailing in the blast furnace, additives are used to produce calcium aluminum silicates that are easier to melt in order to lower the melting point. Basic components, e.g. limestone or dolomite, or acidic additives, e.g. feldspar or alumina, can be added. Iron and slag are mixed together in the blast furnace and are removed from the furnace from time to time and then separated outside the furnace.

As an alternative to the blast furnace process, iron production processes have been developed in which the existing iron ores are reduced with little or no use of carbon-containing reducing agents such as coke, crude oil or natural gas. In the vast majority of processes known as "direct iron reduction", the pig iron produced is in solid, porous form, which is known as sponge iron or "direct" iron and is suitable for steel production.

Until now, such direct reduction processes have mainly been operated with natural gas and oxygen or alternatively with steam or carbon dioxide as reducing agents. The iron ore is treated in a furnace with these reducing agents, producing solid sponge iron. Any silica present is removed by adding a limestone flux.

There are a number of known direct reduction processes. These differ, among other things, according to the respective reduction vessel.

One group of such processes uses a more or less short shaft furnace to produce iron. Iron-rich lump ore, sinter or pellets are used as charge materials, which are preheated and introduced at the top of the furnace. At the bottom of the furnace, a reduction gas containing hydrogen from the first reactor at a temperature below the melting point of the ingredients in the furnace is blown in, producing sponge iron

Another group of direct reduction processes uses retorts or muffles. In these processes, rich iron ore concentrates are placed in ceramic retorts or muffles and arereduced with the hydrogen-containing gas from the first reactor, producing sponge iron that can be used to produce special steels or as iron powder for powder metallurgy.

Still another group of direct reduction processes uses rotary kilns. Here, lump ore or pellets are fed together with limestone or dolomite into rotary kilns up to 110 m long, which are heated up to 1000 °C or even higher. The heat removed from the first reactor by means of heat exchangers can preferably be used for this purpose, or a portion of the hydrogen-containing gas from the first reactor is reacted with added oxygen, whereby the hot gas is heated further and is used to heat the rotary kiln. All or part of the hydrogen-containing gas from the first reactor is used as a reducing agent for the iron ore in the rotary kiln, thereby producing sponge iron.

During iron production in the fluidized bed reactor, sponge iron is produced from fine-grained iron ore. To do this, the iron ore is whirled up and reduced with the hydrogen-containing gas from the first reactor.

Iron production can also take place in an electric furnace. Here, the components in the furnace are partly heated by an electric arc. Another part of the required heat comes from the hot hydrogen-containing gas from the first reactor. Electric furnaces can be operated without preheating and pre-reduction of the charge materials or require preheating and pre-reduction of the ore by upstream rotary kilns.

The pig iron produced in step iii) often still contains undesirable components. These include, for example, carbon, sulphur, silicon and phosphorus. These components are usually removed in a downstream treatment of the pig iron in a steelworks. This transforms the pig iron into steel that is easy to work with. Steel is iron with a carbon content of less than 2%.

Well-known processes can be used to remove the undesirable components. Examples of this are the oxygen blowing process or the electric steel process. These processes are known to skilled artisans. In addition to these two options, various steel refining processes can be used as required. This involves adding additives to the molten steel, usually other metals such as nickel or chromium. This procedure is also known to skilled artisans.

In step v) at least a portion of the thermal energy contained in the hot gas from step iii) is recirculated from the second reactor into the first reactor. This can be preferably performed by discharging the hot gas comprising water vapor from the second reactor and by introducing this into the first reactor. The temperature of the hot gas from the second reactor can be adjusted before entering into the first reactor, for example by extracting thermal energy from said hot gas by means of one or more heat exchangers.

In an alternative embodiment of step v) at least a portion of the thermal energy contained in the hot gas from step iii) is extracted by means of one or more heat exchangers and this thermal energy is recirculated into the first reactor, for example by heating the feed stream(s) of reactants introduced into the first reactor and/or by heating the reaction chamber and/or the reactor wall of the first reactor.

In the second reactor iron oxide is reduced by hydrogen and iron metal and water are generated. In the reaction a gas comprising water vapor, optionally unreacted hydrogen, and optionally further constituents is generated. Optional components may be inert gases or solid or liquid components of the compounds contained in the second reactor. Large amounts of energy are produced increasing the temperature of the gas from the second reactor. The temperature of this gas can be adjusted by transferring heat from the gas to a heat transfer medium using one or more heat exchangers located downstream the second reactor and upstream the first reactor. This allows a control of the gas temperature before entering into the first reactor.

Heat transfer media used in the heat exchanger(s) are described above when discussing the temperature control of the hot gas produced in the first reactor.

As in case of the first reactor the thermal energy extracted from the hot gas from the second reactor can be supplied to an exploiting consumer.

The energy extracted from the hot gas from the second reactor as in case of the hot gas from the first reactor can be dissipated for energy conversion or heat or cold generation, e.g. for heating, by storing it or consuming it directly or indirectly. In an alternative embodiment the thermal energy extracted from the hot gas from the second reactor can be used for heating materials to be fed into the first or second reactor.

The hot gas from the second reactor can be fed directly into the first reactor with or without temperature adjustment by means of heat exchangers. The hot gas from the second reactor can contain solid or liquid constituents. Preferably, the hot gas from the second reactor is purified by removing these constituents thereby generating a purified hot gas which is introduced into the first reactor with or without temperature adjustment by means of heat exchangers.

For purification of the hot gas from the second reactor this is discharged from the second reactor and is transferred into one or more separation devices. Examples of separation devices are discussed above when describing the purification of the hot gas from the first reactor. Preferred separation devices are cyclones.

The hot gas from the second reactor or the thermal energy extracted from this hot gas can be fed at various points into the first reactor. The material containing the thermal energy from the hot gas from the second reactor, e.g. a heat transfer medium, can be divided into several partial streams for this purpose, which can feed their thermal energy into the first reactor at different locations; or the hot gas stream from the second reactor can be divided into several partial streams for this purpose, which can be fed into the first reactor at different points. In general, the inlet zone of the first reactor is charged with the metal, water and optionally with adjuvants, such as oxidants or inert gases. In the first reactor the metal is reacted with water and optionally with further oxidant and a reaction zone is established within the reactor generating metal oxide and hydrogen containing hot gas which exits the first reactor via an exit zone. The hot gas from the second reactor is removed from this reactor and is introduced into the first reactor in such a way that it moves through the reactor in the same direction as the metal oxide and the hot hydrogen containing product gas. In one embodiment, the hot water vapor containing gas is removed from one end of the second reactor and is fed into the inlet zone of the first reactor or a portion of the hot gas from the second reactor is fed into the inlet zone of the first reactor and one or more partial streams of the hot gas are fed into the first reactor at sites located between the inlet and the exit zone of the first reactor. In another embodiment, thermal energy extracted from the hot gas from the second reactor is introduced into the inlet zone of the first reactor, or a portion of the thermal energy is introduced into the inlet zone of the first reactor and one or more parts of the thermal energy are fed into the first reactor at sites located between the inlet zone and the luotlet zone of the first reactor. The thermal energy extracted from the hot gas from the second reactor may be also used to heat materials to become introduced into the first or second reactor.

The temperature of the hot gas from the second reactor prior to introduction therof into the first reactor can be adjusted by using different measures. The hot gas can be introduced without any temperature adjustment into the first reactor; or the temperature of the hot gas exiting the second reactor can be lowered by extracting a portion of the thermal energy from the hot gas by means of heat exchanger(s) and/or by adding inert gases of lower temperature to the hot gas; or the temperature of the hot gas exiting the second reactor can be raised by introducing a portion of the hydrogen present in the hot gas from the first reactor with an oxidant, preferably with air, into the feed line and using the heat of reaction between hydrogen and oxygen to increase the temperature of the hot gas from the second reactor.

Preferably, the temperature of the hot gas prior to introduction into the first or second reactor is adjusted to a predetermined value. The gas temperature at the entrance into the first or second reactor is preferably controlled and is an important parameter for the reactions taking place in these reactors. By adjusting the temperature, for example the reaction speed of the oxidation process of the metal or the reaction speed of the reduction process of the iron oxide can be controlled.

For controlling the temperature of the hot gases from the first reactor and/or from the second reactor one of more temperature sensors may be installed upstream the first reactor and downstream the second reactor or upstream the second reactor and downstream the first reactor. These sensors are known to the skilled artisan in the field of hot gas processing.

A process parameter for controlling the oxidation reaction in the first reactor is the flow velocity of the hot gas from the second reactor. This can be adjusted by using pumps which ensure a predetermined flow velocity. Another means for adjusting the flow velocity is a stream of inert gas that is injected into the flow of hot gas. These messures are known to the skilled artisan in the field of hot gas processing.

A process parameter for controlling the reduction reaction in the second reactor is the flow velocity of the hot gas from the first reactor. This can be adjusted by using pumps which ensure a predetermined flow velocity. Another means for adjusting the flow velocity is a stream of inert gas that is injected into the flow of hot gas. These messures are known to the skilled artisan in the field of hot gas processing.

Still another process parameter for controlling the reduction reaction in the second reactor is the hydrogen concentration in the hot gas from the first reactor and the proportion between molecular and atomic hydrogen, H₂ or H, respectively. Increasing the amount or atomar hydrogen and/or the hydrogen contentration in the hot gas from the first reactor promotes the reduction reaction in the second reactor.

The temperature of the hot gas from the second reactor can be selected within a broad range. Typical temperatures are between 800 and 1500°C. The temperatures of the hot gas are measured at the exit site of said gas from the second reactor.

Preferably, the temperature of the hot gas in step v) when exiting the second reactor is between 900 and 1300°C and most preferred between 1000 and 1100°C.

Preferred is a process wherein the metal oxide contained in the hot gas from the first reactor is separated from the hot gas to generate a purified hot gas that is introduced into the second reactor.

The metal used in step i) is preferably aluminium.

In another preferred process the temperature of the hot gas in step ii) is between 900 and 1200°C, preferably between 1000 and 1100°C. The temperatures of the hot gas are measured at the inlet site of said gas into the second reactor.

In another preferred process the temperature of the hot gas in step v) is between 900 and 1200°C, preferably between 1000 and 1100°C. The temperatures of the hot gas are measured at the exit site of said gas from the second reactor.

In a preferred embodiment of the process of this invention the temperature of the hot gas generated in step i) is controlled extracting a predetermined quantity of thermal energy from the hot gas by means of one or more heat exchangers; very preferred the temperature of the hot gas from the first reactor is reduced to a predetermined value before introducing this gas into the second reactor and wherein the heat extracted by the heat exchangers is converted into electrical energy using a heat engine.

In another preferred embodiment of the process of this invention the temperature of the hot gas generated in step iii) is controlled by extracting a predetermined quantity of thermal energy from the hot gas by means of one or more heat exchangers; very preferred the temperature of the hot gas from the second reactor is reduced to a predetermined value before introducing this into the first reactor and wherein the heat extracted by the heat exchangers is converted into electrical energy using a heat engine.

In another preferred process of this invention the amount of hydrogen atoms in the hot gas generated in step i) is increased by splitting a portion of the hydrogen molecules present in said hot gas by guiding the hot gas prior to its entrance into the second reactor through a plasma generator, preferably an electric arc, or over a surface containing nickel metal.

In a preferred process of this invention the reaction in step iii) results in liquid iron metal or still more preferrerd in solid spongy iron metal.

In another preferred embodiment of the process of this invention the amount of thermal energy produced in the second reactor is controlled by the flow rate of hot gas from the first reactor into the second reactor and/or by the temperature of the hot gas from the first reactor.

Preferred is a process wherein the hot gas produced in step i) is generated in a plurality of first reactors which are arranged in parallel and which discharge into the second reactor. Very preferred these first reactors are switchable connected with the second reactor in order to allow the hot gas from said first reactors to be introduced in a controlled manner into the second reactor.

In another preferred process of this invention the metal, the water vapour from the second reactor or a mixture comprising metal and water vapour are introduced into an inlet zone of a reaction chamber of the first reactor via one or more pipes tangentially extending through the jacket of the first reactor, as a result of which a vortex is formed in the reaction chamber which moves in the direction towards the outlet zone of the reaction chamber.

In still another preferred embodiment of the process of this invention the metal oxide generated in step i) is reduced to the metal by means of electrolysis which is reintroduced into step i) performed in the first reactor.

The invention also relates to a device for preparing iron metal by reduction of iron oxide with hydrogen comprising the elements A) to F) defined above.

In a preferred device in addition to elements A) to F) as element G) at least one separation device is present that is arranged between the first reactor and the second reactor and that separates the metal oxide contained in the hot gas from the first reactor and generates a purified hot gas that is introduced into the second reactor.

In another preferred device sensors are provided for determining the temperature of the hot gas from the first reactor and for determining the temperature of the hot gas from the second reactor.

In still another preferred device flow meters are provided for determining the flow of the stream of hot gas from the first reactor and for determining the flow of the stream of hot gas from the second reactor.

Preferred is a device wherein the first reactor has a cylindrical shape forming a reaction chamber and one or more pipes tangentially extending through the jacket of the first reactor for the introduction of metal, water or of a mixture comprising metal and water into an inlet zone of the first reactor, as a result of which a vortex is formed in the reaction chamber which moves in the direction towards the outlet zone of the reaction chamber.

In another preferred embodiment of the device of this invention this comprises in addition to elements A) to G) as element H) a plasma generator to increase the amount of hydrogen atoms in the hot gas generated in the first reactor by splitting a portion of the hydrogen molecules present in said hot gas prior to its entrance into the second reactor.

In still another preferred embodiment of the device of this invention the second reactor is a blast furnace or a shaft furnace, very preferrerd a shaft furnace combined with an arc furnace.

### Description of the Drawing

In Figure 1 one embodiment of the process / device of the present invention is shown.

In a first reactor (1) water and aluminium metal are reacted and a hot gas comprising hydrogen and aluminium oxide (alumina) as well as thermal and radiant energy are generated. First reactor (1) is equipped with an inlet (3) for aluminium, water and optionally inert gas. In the first reactor (1) a flame zone (7) develops by the reaction between aluminium and water which can be monitored through the reactor jacket via window (12). The hot gas containing hydrogen and alumina generated in the first reactor (1) is fed into a cyclone (11) for separation of the alumina from the hot gas resulting in a hydrogen-containing hot product gas. Separated alumina is removed from cyclone (11) via exit line (9). The hydrogen-containing hot product gas is removed from cyclone (11) via feed line (8) and is introduced into second reactor (2). This second reactor (2) contains an inlet (4) for iron oxide and additives and an outlet (10) for reduced iron. This iron metal can be spongy iron which may be introduced in an electric arc furnace (not shown). In the second reactor (2) iron oxide is reacted with hydrogen to generate metallic iron and a hot gas comprising water vapor. The hot gas is removed from the second reactor (2) and is introduced via water vapour backloop line (5) into the first reactor (1) where it reacts with aluminium to generate thermal and radiant energy, hydrogen and alumina. A fraction of the thermal energy contained in the hot gases generated in the first and second reactor (1, 2) is extracted from said hot gases by means of heat exchangers (not shown). The extracted thermal energy may be introducted into a heat exchanger located in the reactor jacket of the second reactor (2) or of the first reactor (1), respectively. The thermal fluid transporting the heat from the first reactor (1) to the second reactor (2) and vice versa is guided through lines (6a, 6b) forming heat exchange loops. Additional exchange loops (13a, 13b) can be used to adjust temperature and to use heat for consumers, such as turbines for electric power generators for electricity needed in the process and/or for use in a power grid.

In an alternative embodiment (not shown) a fraction of the thermal energy contained in the hot gases generated in the first and second reactor (1, 2) is extracted by means of heat exchangers (not shown) to adjust the temperature of said hot gases. The extracted heat is directly used for consumers, such as turbines for electric power generators for electricity needed in the process and/or for use in a power grid.

In the embodiment shown in Figure 1 the hot water vapour containing gas from reactor (2) is recirculated into the first reactor (1) and is used as an oxidant for aluminium metal to generate hydrogen and alumina. Thus there is a loop in this process / device circulating hydrogen in the system. Another loop (not shown) may be used in this process / device. This loop covers aluminium metal which is oxidized to generate aluminia which in turn is used as a raw material for producing aluminium metal in an electrolysis plant. This electrolysis plant may be located near the device comprising first and second reactors or may be spatially separated. In the latter case alumina generated in the device comprising first and second reactors is transported to the electrolysis plant and aluminium generated by electrolysis is retransported to the device comprising first and second reactors. The electrolysis plant is preferably operated using regenerative energy, e.g. electricity generated by means of photovoltaics and/or wind power.

The following example describes the invention without limiting it to the example.

### Example

In this example the operation of a first reactor is described which generates thermal and radiant energy and hydrogen by reacting aluminium particles with water vapour. This first reactor can be combined with a second reactor for reducing iron oxides with hydrogen, for example with a well-known shaft furnace. First and second reactor form a loop wherein hydrogen generated in the first reactor is introduced into the second reactor and water vapour generated in the second reactor is introduced into the first reactor as an oxidant for the aluminium.

The first reactor was composed of a burner with a radial water vapour injection and aluminum/nitrogen/air aerosol injection, a combustion chamber with an optical access to observe the flame during the combustion experiments and an outflow duct for gas sampling and analysis. The cylindrical combustion chamber, 0.6 m long and 0.105 m large consisted in a cooled double-walled stainless-steel pipe with an optical access for the flame observation. The chamber opened onto an outlet pipe with a free-exhaust.

The aluminum/nitrogen/air aerosol was generated by a PALAS BEG 1000 type B, disposed on a Kern DS20K0.1 balance whose accuracy was 0.1g. This setup permitted to measure the effective aluminum flow rate. The aerosol was injected through the central primary tube. The total flow of injected air and nitrogen was controlled by mass flow meters Brooks. The amount of air and nitrogen was chosen to permit a total reaction between aluminium and the oxygen contained in the air. A secondary mass flow of water vapour was tangentially injected generating a swirl of water vapour around the axially injected aluminium/nitrogen/air aerosol. The total flow of injected water vapour was controlled by mass flow meters Brooks.

An aluminum powder supplied by MonDroguiste (as "Aluminium en poudre" reference) was used. Its purity was greater than 99.7wt%. The Al flake particles were sized with a Retsch AS200 Digiti siewer in a predetermined range. The particle size distribution of each sample tested was obtained using a laser granulometer Malvern Mastersizer 2000 with Sirocco 2000M. The Al flame was initiated by an oxyacetylene burner which was stopped after approximately 10s once the Al flame was stabilized. The total heat flux dissipated by the flame through the wall of the combustion chamber was estimated from the heat power recovered by the water circulating in the double-walled combustion chamber.

A sample of the gas exiting the combustion chamber was collected at the inlet of the exhaust pipe using a tube placed perpendicularly to the flow with three bored holes placed back on the tube. The hydrogen amount at the outlet of the system was monitored.

The gas temperature was measured using two K-type thermocouples located in the first part of the chamber at 0.21 m of the combustion chamber inlet and at the end of the chamber at 0.56m, respectively.

With this setup different experiments were carried out. The following process parameters were used resulting a stable flame.

Pressure of water vapour at the inlet site was atmospheric pressure.

Temperature of water vapour at the inlet site was in the range between 100 and 200 °C.

Flow of water vapour yielding stable flame was tested up to 280g/h.

Aluminium mass flow rate at powder inlet (Palas) was about 6 m³/h.

Aluminium powder particle size was up to 30 µm.

Flow of aluminium powder was up to 3 kg/h.

Measured hydrogen content at the outlet was up to 4% corresponding to at least 40% conversion.

Measured temperature at the outlet and in the reactor was up to 1300 °C (apparent temperature of gas phase) which is assumed at the lower end of the particle temperature in the flame.

Heat production of the system was around 10 kW.

These results demonstrate the feasibility of hydrogen and power generation from aluminum combustion in a swirl-stabilized turbulent flame in a reactor forming one part in the device of this invention.

## Claims

1. A process for preparing iron metal by reduction of iron oxide with hydrogen comprising the steps:
i) generate a hot gas comprising hydrogen and metal oxide in a first reactor by reacting water and a metal selected from the group consisting of silicon, magnesium, aluminum or alloy containing two or more of these metals,
ii) introduce the hot gas from the first reactor into a second reactor comprising iron oxides,
iii) react the iron oxide with the hydrogen in the second reactor to generate metallic iron and a hot gas comprising water vapor,
iv) charge the second reactor with iron oxide and discharge the metallic iron from the second reactor, and
v) recirculate at least a portion of the thermal energy contained in the hot gas from step iii) from the second reactor into the first reactor.

2. The process according to claim 1, wherein in step v) the hot gas comprising water vapor is discharged from the second reactor is is introduced into the first reactor.

3. The process according to at least one of claims 1 to 2, wherein the metal oxide contained in the hot gas from the first reactor is separated from the hot gas to generate a purified hot gas that is introduced into the second reactor.

4. The process according to at least one of claims 1 to 4, wherein the metal in step i) is aluminium.

5. The process according to at least one of claims 1 to 4, wherein the temperature of the hot gas in step ii) at the inlet site into the second reactor is between 900 and 1200°C, preferably between 1000 and 1100°C and/or wherein the temperature of the hot gas generated in step iii) at the exit site from the second reactor is between 900 and 1200°C, preferably between 1000 and 1100°C.

6. The process according to at least one of claims 1 to 5, wherein the temperature of the hot gas generated in step i) is controlled by extracting a predetermined quantity of thermal energy from the hot gas by means of one or more heat exchangers before introducing this hot gas into the second reactor, said extracted thermal energy being preferably converted into electrical energy using a heat engine, and/or wherein the temperature of the hot gas generated in step iii) is controlled by extracting a predetermined quantity of thermal energy from the hot gas exiting the second reactor by means of one or more heat exchangers said extracted thermal energy being preferably converted into electrical energy using a heat engine or said extracted thermal energy being preferably recirculated into the first reactor.

7. The process according to at least one of claims 1 to 6, wherein the amount of hydrogen atoms in the hot gas generated in step i) is increased by splitting a portion of the hydrogen molecules present in said hot gas by guiding the hot gas prior to its entrance into the second reactor through a plasma generator, preferably an electric arc, or over a surface containing nickel metal.

8. The process according to at least one of claims 1 to 7, wherein the reaction in step iii) results in liquid iron metal or in solid spongy iron metal.

9. The process according to at least one of claims 1 to 8, wherein the amount of thermal energy produced in the second reactor is controlled by the flow rate of hot gas from the first reactor into the second reactor and/or by the temperature of the hot gas from the first reactor and/or by the concentration of hydrogen contained in the hot gas from the first reactor.

10. The process according to at least one of claims 1 to 9, wherein the hot gas produced in step i) is generated in a variety of first reactors which are arranged in parallel and which discharge into the second reactor, which first reactors are preferably switchably connected with the second reactor to allow the hot gas from said first reactors to be introduced in a controlled manner into the second reactor.

11. The process according to at least one of claims 1 to 10, wherein the metal, the water or a mixture comprising metal and water are introduced into an inlet zone of a reaction chamber of the first reactor via one or more pipes tangentially extending through the jacket of the first reactor, as a result of which a vortex is formed in the reaction chamber which moves in the direction towards the outlet zone of the reaction chamber.

12. The process according to at least one of claims 1 to 11, wherein the metal oxide generated in step i) is reduced to the metal by means of electrolysis which is reintroduced into step i) performed in the first reactor.

13. A device for preparing iron metal by reduction of iron oxide with hydrogen comprising the elements:
A) at least one first reactor for generating a hot gas comprising hydrogen and metal oxide by reacting water and a metal selected from the group consisting of silicon, magnesium, aluminum or alloy containing two or more of these metals,
B) at least one feed line for introducing the metal and water into the first reactor or into a mixing device arranged upstream to the first reactor and discharging into the first reactor,
C) a second reactor for reacting iron oxide with hydrogen to generate metallic iron and a hot gas comprising water vapor,
D) at least one feed line for introducing the iron oxide into the second reactor,
E) at least one discharge line for discharging the iron metal from the second reactor, and
F) at least one device that recirculates at least a portion of the thermal energy contained in the hot gas generated in the second reactor from the second reactor into the first reactor.

14. The device according to claim 13, wherein device F) is at least one feed line for the hot gas generated in the second reactor that connects the second reactor with the first reactor and introduces said hot gas for reaction between water and metal into the first reactor.

15. The device according to at least one of claims 13 to 14, wherein this comprises in addition to elements A) to F) as element G) a separation device that is arranged between the first reactor and the second reactor and that separates the metal oxide contained in the hot gas from the first reactor and generates a purified hot gas that is introduced into the second reactor.

16. The device according to at least one of claims 13 to 15, wherein this comprises sensors for determining the temperature of the hot gas from the first reactor and for determining the temperature of the hot gas from the second reactor and/or which comprises flow meters for determining the flow of the stream of hot gas from the first reactor and for determining the flow of the stream of hot gas from the second reactor.

17. The device according to at least one of claims 13 to 16, wherein the first reactor has a cylindrical shape forming a reaction chamber and one or more pipes tangentially extending through the jacket of the first reactor for the introduction of metal, water or of a mixture comprising metal and water into an inlet zone of the first reactor, as a result of which a vortex is formed in the reaction chamber which moves in the direction towards the outlet zone of the reaction chamber.

18. The device according to at least one of claims 13 to 17, wherein this comprises in addition to elements A) to G) as element H) a plasma generator to increase the amount of hydrogen atoms in the hot gas generated in the first reactor by splitting a portion of the hydrogen molecules present in said hot gas prior to its entrance into the second reactor.

19. The device according to at least one of claims 13 to 18, wherein the second reactor is a blast furnace or a shaft furnace, preferably a shaft furnace which is combined with an arc furnace.
